# EUROPEAN PATENT APPLICATION

(11) **EP 4 749 738 A1**
(43) Date of publication of application: **27.05.2026**
(21) Application number: 25217767.0
(22) Date of filing: 21.11.2025
(51) Int. Cl.: H01M 10/04, H01M 10/058, B29B 7/42

(54) **SECONDARY BATTERY POTTING DEVICE**

(30) Priority: 26.11.2024 KR 20240171243
(71) Applicant: SAMSUNG SDI CO., LTD., Yongin-si, Gyeonggi-do 17084 (KR)
(72) Inventor: KIM, Hyeon Young, Suwon-si, Gyeonggi-do 16678 (KR)
(74) Representative: Maiwald GmbH

(57) **Abstract**

The present disclosure relates to a secondary battery potting device, and the secondary battery potting device includes a liquid supply unit supplying a first liquid and a second liquid, a block unit connected to the liquid supply unit and provided with a first inlet and a second inlet through which the first liquid and the second liquid are injected, respectively, and an outlet which is in communication with the first inlet and the second inlet, a nozzle unit connected to the outlet and communicating with the outlet, a cover unit coupled to the outlet and covering the nozzle unit, and a mixing promotion part installed in the nozzle unit and promoting mixing of the first liquid and the second liquid.

## Description

### FIELD

The present disclosure relates to a secondary battery potting device.

### BACKGROUND

Generally, recently, the demand for secondary batteries with high energy density and high capacity is rapidly increasing with the rapid supply of electronic devices using batteries, such as mobile phones, notebook computers, electric vehicles, and the like. Accordingly, research and development to improve performance of lithium secondary batteries is being actively conducted.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when lithium ion is intercalated/deintercalated into/from the positive and negative electrodes.

In the secondary battery, a vent is installed to induce the discharge of flames, gas, smoke, etc. when an event occurs. During thermal runaway of the secondary battery, the vent is potted to delay heat propagation to neighboring secondary batteries. During the process of potting the vent, the potting liquid flows down from a nozzle of the potting device and falls on the facility and product, resulting in defective products.

The herein-described information disclosed in the background technology of the present disclosure is only for improving understanding of the background of the present disclosure, and accordingly, can include information that does not constitute the related art.

### SUMMARY

The present disclosure is directed to providing a secondary battery potting device capable of applying a potting liquid to a vent.

However, technical problems to be solved by the present disclosure are not limited to the herein-described problems, and other problems which are not mentioned, will be clearly understood by those skilled in the art from the description of the disclosure disclosed herein.

According to aspects of the present disclosure, there is provided a secondary battery potting device including a liquid supply unit supplying a first liquid and a second liquid, a block unit connected to the liquid supply unit and provided with a first inlet and a second inlet through which the first liquid and the second liquid are injected, respectively, and an outlet which is in communication with the first inlet and the second inlet, a nozzle unit connected to the outlet and communicating with the outlet, a cover unit coupled to the outlet and covering the nozzle unit, and a mixing promotion part installed in the nozzle unit and promoting mixing of the first liquid and the second liquid.

The outlet may include a first outlet extending from the block unit and having a screw thread formed on an outer circumferential surface thereof and a second outlet extending from the first outlet and having an outer diameter smaller than that of the first outlet.

The nozzle unit may include a nozzle body part accommodating the mixing promotion part and providing a space in which the first liquid and the second liquid are mixed, a hopper part provided at one side of the nozzle body part and formed to surround the second outlet, and a discharge part provided at the other side of the nozzle body part and through which mixed liquid flowing in the nozzle body part is discharged.

The mixing promotion part may include a screw element fixed to the inside of the nozzle body part.

A diameter of the nozzle body part may be formed to be smaller than a diameter of the hopper part, and a diameter of the discharge part may be formed to be smaller than the diameter of the nozzle body part.

The nozzle unit may include a transparent material.

The secondary battery potting device may further include a sealing member interposed between the hopper part and the second outlet.

The sealing member may be elastically deformable and may be formed in a ring shape.

The cover unit may include a cover body part surrounding the nozzle body part, a holder provided at one side of the cover body part and supporting the hopper part, and a nut supporting the holder and spirally coupled to the first outlet.

A diameter of the cover body part may be formed to be smaller than a diameter of the holder, and the hopper part may be accommodated in the holder.

The holder may be provided with a first seating part formed to protrude from an inner circumferential surface and on which the hopper part is seated.

A diameter of the holder may be formed to be smaller than a diameter of the nut, and the holder may be accommodated in the nut.

The nut may be provided with a second seating part formed to protrude from an inner circumferential surface and on which the holder is seated.

The discharge part may protrude from the cover body part and may be exposed.

An opening may be provided in an outer circumferential surface of the cover body part.

The liquid supply unit may include a first storage part in which the first liquid is stored and which includes a first pump pumping the first liquid, a second storage part in which the second liquid is stored and which includes a second pump pumping the second liquid, a first transfer line connecting the first storage part and the first inlet, and a second transfer line connecting the second storage part and the second inlet.

The first liquid pumped by the first pump and transferred through the first transfer line may have a pressure of approximately 40 bar, and the second liquid pumped by the second pump and transferred through the second transfer line may have a pressure of approximately 34 bar.

The secondary battery potting device may further include a moving unit to which the block unit is coupled and which moves the block unit.

The first liquid may include a resin, and the second liquid may include a hardener.

According to aspects of the present disclosure, there is provided a method of manufacturing a secondary battery potting device including providing a liquid supply unit that supplies a first liquid and a second liquid, providing a block unit connected to the liquid supply unit and including with a first inlet and a second inlet through which the first liquid and the second liquid are injected, respectively, and an outlet in communication with the first inlet and the second inlet, providing a nozzle unit connected to and that communicates with the outlet, providing a cover unit coupled to the outlet that covers the nozzle unit, and installing a mixing promotion part in the nozzle unit that promotes mixing of the first liquid and the second liquid.

### BRIEF DESCRIPTION OF THE DRAWINGS

The following drawings attached to this specification illustrate preferred embodiments of the present disclosure and, together with the detailed description of the disclosure to be described herein, serve to further understand the technical idea of the present disclosure, and therefore the present disclosure should not be construed as being limited to matters described in such drawings, in which:
FIGS. 1 and 2 are views schematically illustrating a configuration of a secondary battery potting device according to embodiments of the present disclosure;
FIG. 3 is a perspective view schematically illustrating a configuration of the secondary battery potting device according to embodiments of the present disclosure;
FIG. 4 is a plan view schematically illustrating a configuration of the secondary battery potting device according to embodiments of the present disclosure;
FIG. 5 is an exploded perspective view schematically illustrating a configuration of the secondary battery potting device according to embodiments of the present disclosure;
FIG. 6 is a cross-sectional view schematically illustrating a configuration of the secondary battery potting device according to embodiments of the present disclosure;
FIG. 7 is a bottom perspective view schematically illustrating a block unit of the secondary battery potting device according to embodiments of the present disclosure;
FIG. 8 is a perspective view schematically illustrating a nozzle unit of the secondary battery potting device according to embodiments of the present disclosure;
FIG. 9 is a cross-sectional perspective view schematically illustrating a nut of the secondary battery potting device according to embodiments of the present disclosure; and
FIG. 10 is a cross-sectional view schematically illustrating a state in which a first liquid and a second liquid are mixed and discharged in the secondary battery potting device according to embodiments of the present disclosure.

### DETAILED DESCRIPTION

Hereinafter, exemplary embodiments of the present disclosure will be described in detail with reference to the attached drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

Further, when used in the present specification, "comprise or include" and/or "comprising or including" specify the presence of mentioned shapes, numbers, steps, operations, members, elements and/or groups thereof, and do not exclude the presence or addition of one or more other shapes, numbers, steps, operations, members, elements and/or groups thereof.

Further, in order to help understanding of the present disclosure, the accompanying drawings are not drawn to actual scale and the sizes of some components may be exaggerated. In addition, the same reference numerals may be given to the same components in different embodiments.

The mention that two objects to be compared are 'the same' means that that the two objects are 'substantially the same.' Accordingly, 'substantially the same' may include a deviation considered as a low level in the art, for example, a deviation within 5%. Further, uniformity of a parameter in a certain region may mean uniformity from an average point of view.

Although first, second, and the like are used to describe various components, it goes without saying that these components are not limited by these terms. These terms are only used to distinguish one component from another component, and unless otherwise stated, it goes without saying that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "on," "connected to," or "coupled to" another component, it should be understood that the components may be directly connected or coupled to each other, but another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term such as "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers and/or sections, these elements, components, regions, layers and/or sections should not be limited by these terms. These terms are used only to distinguish one element, component, region, drawing layer, or section from another element, component, region, drawing layer, or section. Accordingly, a first element, component, region, layer, or section to be described herein may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification is intended to describe the embodiments of the present disclosure, and is not intended to limit the present disclosure.

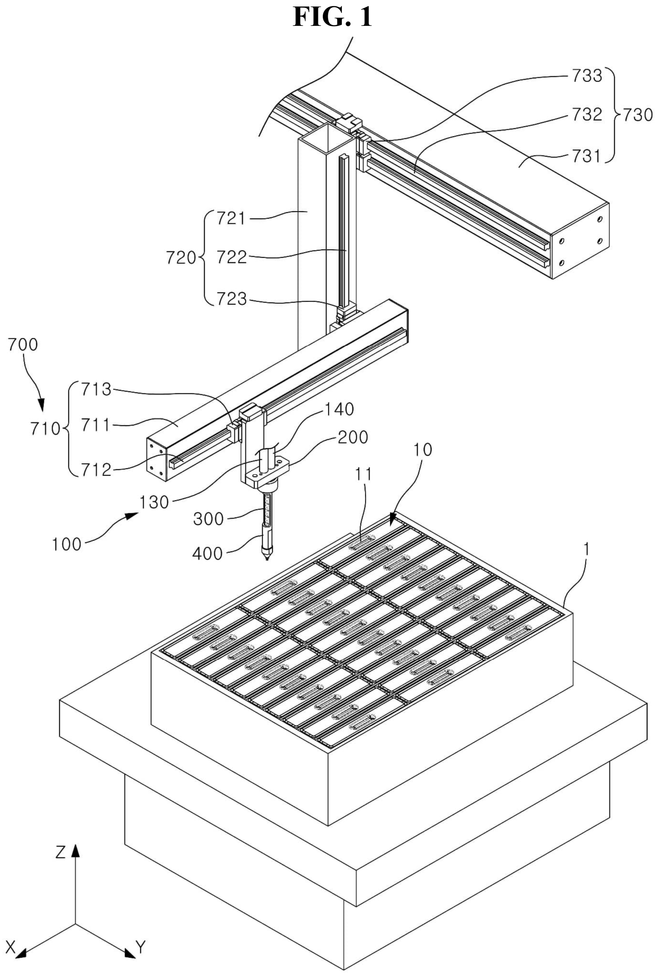

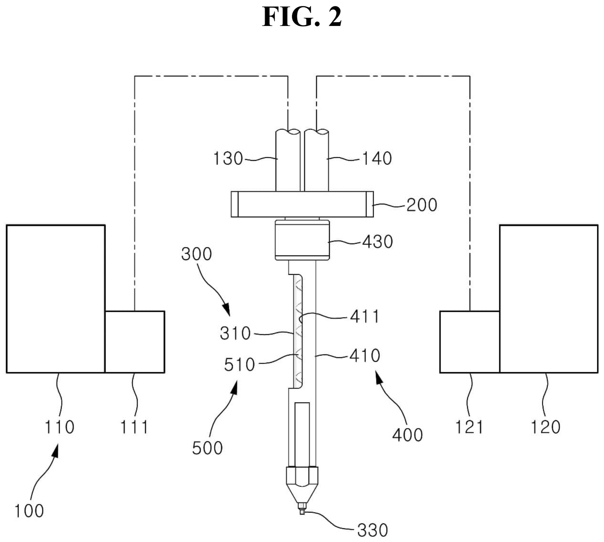

FIGS. 1 and 2 are views schematically illustrating a configuration of a secondary battery potting device according to embodiments of the present disclosure.

Referring to FIGS. 1 and 2, the secondary battery potting device according to embodiments of the present disclosure, a potting liquid may be applied to a vent 11 provided in a secondary battery 10 to pot the vent 11. Thermal insulation and electrical insulation between the secondary batteries 10 may be enhanced from flame, gas, and smoke during thermal runaway of the secondary battery 10 by potting the vent 11. Accordingly, during the thermal runaway of the secondary battery 10, heat propagation to the neighboring secondary battery 10 may be delayed.

The secondary battery 10 may be accommodated in a housing 1. The housing 1 may support the secondary battery 10 and protect the secondary battery 10 from an external impact and foreign substances. The housing 1 may provide a space which accommodates the secondary battery 10 therein.

The housing 1 may be formed to have a shape of a box with an empty interior and one open side. For example, the open side of the housing 1 may be disposed to face upward based on FIG. 1. A cross-sectional shape of the housing 1 is not limited to the rectangle shown in FIG .1 and may be designed to have various shapes such as polygonal, circular, and elliptical shapes.

The secondary battery 10 may function as a unit structure which stores and supplies power in the battery module. The secondary battery 10 may be disposed inside the housing 1.

One or more secondary batteries 10 may be provided. In FIG. 1, a case in which a plurality of secondary batteries 10 are provided is shown as an example, but the secondary battery 10 is not limited thereto and a single secondary battery may also be provided.

When the plurality of secondary batteries 10 are provided, the plurality of secondary batteries 10 may be arranged in a plurality of rows inside the housing 1. For example, the plurality of secondary batteries 10 may be arranged in the plurality of rows in an X-axis direction (based on FIG. 1).

However, the arrangement form of the plurality of secondary batteries 10 is not limited thereto, and may be arranged in a plurality of rows in a Y-axis direction (based on FIG. 1) or in the plurality of rows in the X-axis direction and the Y-axis direction.

Here, a first direction may mean the X-axis direction based on FIG. 1, a second direction may mean the Y-axis direction based on FIG. 1, and a third direction may mean a Z-axis direction based on FIG. 1.

Hereinafter, an example in which the secondary battery 10 is a prismatic battery as a lithium ion secondary battery 10 will be described. However, the present disclosure is not limited thereto, and the secondary battery 10 may be a lithium polymer battery or cylindrical battery.

The vent 11 may be provided on an upper surface of the secondary battery 10. The vent 11 may be disposed to face the secondary battery potting device according to the present embodiment in a direction parallel to the third direction. The secondary battery potting device may be disposed to be spaced apart from the secondary battery 10 in the third direction. That is, the secondary battery potting device may be disposed above the secondary battery 10.

A notch may be formed in the vent 11. The vent 11 may be opened and closed in response to a change in internal pressure of the secondary battery 10. That is, the vent 11 may maintain a closed state during normal operation of the secondary battery 10 to seal the secondary battery 10.

The vent 11 may be opened as the internal pressure of the secondary battery 10 rises above a set value due to overcharging, the occurrence of fire, or the like, and may discharge emissions such as flames, gas, or the like from the inside of the secondary battery 10 to the outside of the secondary battery 10.

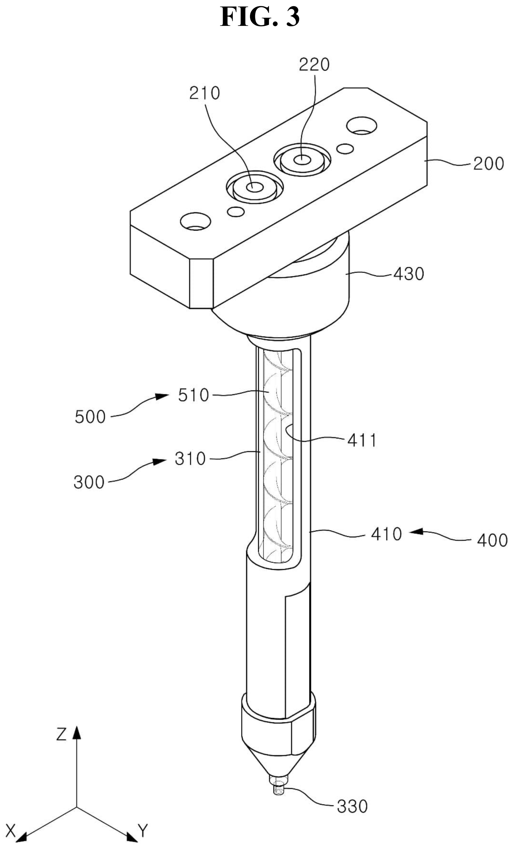

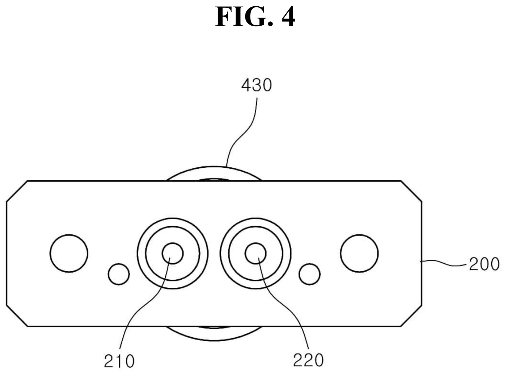

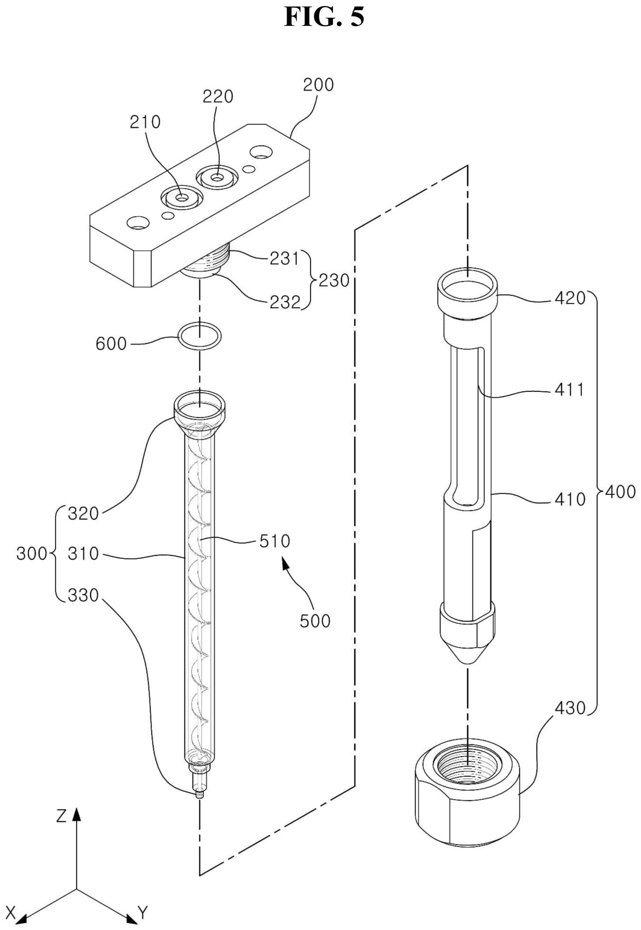

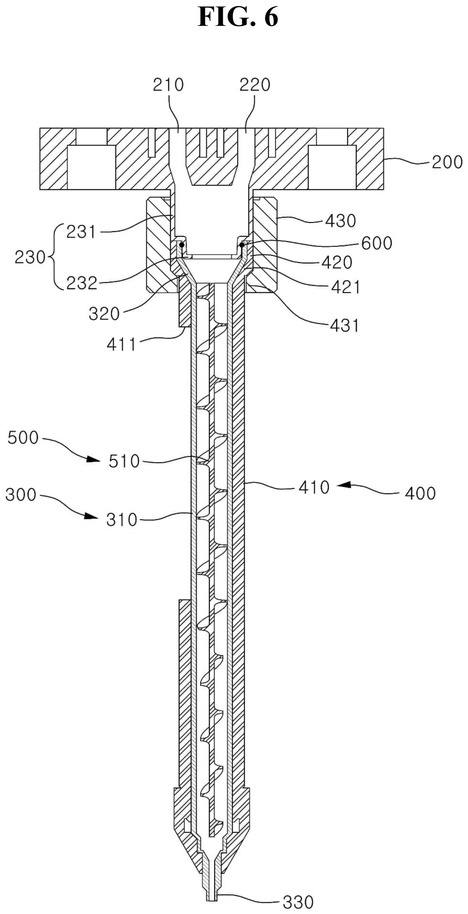

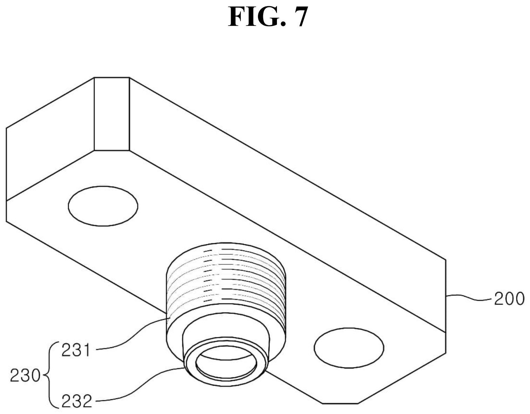

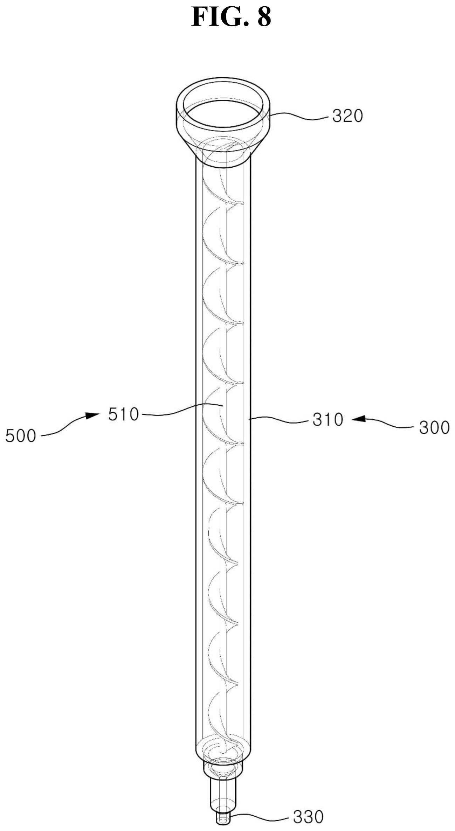

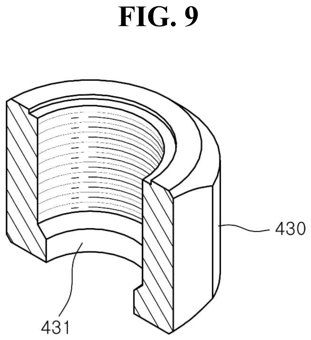

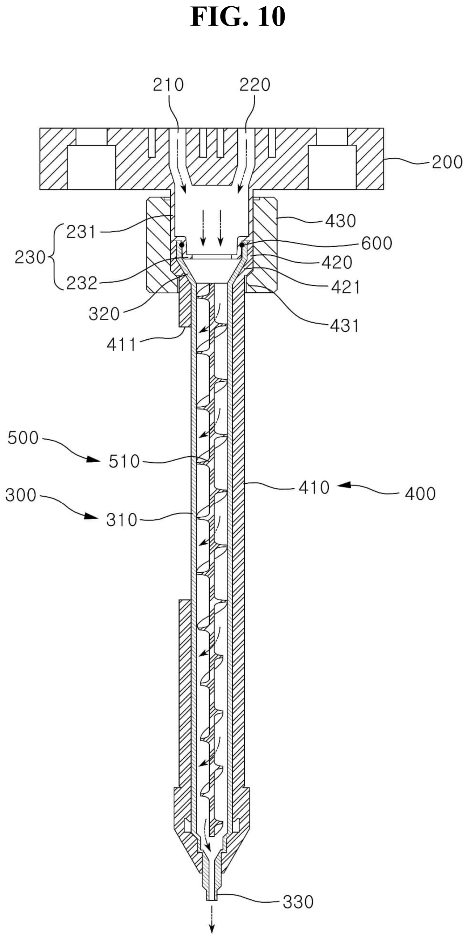

FIG. 3 is a perspective view schematically illustrating a configuration of the secondary battery potting device according to embodiments of the present disclosure, FIG. 4 is a plan view schematically illustrating a configuration of the secondary battery potting device according to embodiments of the present disclosure, FIG. 5 is an exploded perspective view schematically illustrating a configuration of the secondary battery potting device according to embodiments of the present disclosure, FIG. 6 is a cross-sectional view schematically illustrating a configuration of the secondary battery potting device according to embodiments of the present disclosure, FIG. 7 is a bottom perspective view schematically illustrating a block unit of the secondary battery potting device according to embodiments of the present disclosure, FIG. 8 is a perspective view schematically illustrating a nozzle unit of the secondary battery potting device according to embodiments of the present disclosure, FIG. 9 is a cross-sectional perspective view schematically illustrating a nut of the secondary battery potting device according to embodiments of the present disclosure, and FIG. 10 is a cross-sectional view schematically illustrating a state in which a first liquid and a second liquid are mixed and discharged in the secondary battery potting device according to embodiments of the present disclosure.

Referring to FIGS. 1 to 10, the secondary battery potting device according to embodiments of the present disclosure may include a liquid supply unit 100, a block unit 200, a nozzle unit 300, a cover unit 400, a mixing promotion part 500, a sealing member 600, and a moving unit 700.

The liquid supply unit 100 may supply the first liquid and the second liquid. The liquid supply unit 100 may supply the first liquid and the second liquid to the block unit 200. The first liquid may include a liquid resin as a main material. The first liquid may include a liquid hardener.

The liquid supply unit 100 may include a first storage part 110, a second storage part 120, a first transfer line 130, and a second transfer line 140.

The first storage part 110 may store the first liquid. The first storage part 110 may provide a space for accommodating the first liquid therein. The first storage part 110 may be provided with a first pump 111 for pumping the first liquid to a set pressure.

The second storage part 120 may store the second liquid. The second storage part 120 may provide a space for accommodating the second liquid therein. The second storage part 120 may be provided with a second pump 121 for pumping the second liquid to a set pressure.

The first transfer line 130 may connect the first storage part 110 and the block unit 200. The first transfer line 130 may connect the first storage part 110 and a first inlet 210 of the block unit 200. The first transfer line 130 may connect the first pump 111 and the first inlet 210. The first transfer line 130 may be exemplified as a pipe providing a flow path through which the first liquid flows.

The pressure of the first liquid pumped by the first pump 111 and transferred through the first transfer line 130 may be 40 bar. The first liquid stored in the first storage part 110 may be injected into the first inlet 210 by a pumping pressure of 40 bar.

The second transfer line 140 may connect the second storage part 120 and the block unit 200. The second transfer line 140 may connect the second storage part 120 and a second inlet 220 of the block unit 200. The second transfer line 140 may connect the second pump 121 and the second inlet 220. The second transfer line 140 may be exemplified as a pipe providing a flow path through which the second liquid flows.

The pressure of the second liquid pumped by the second pump 121 and transferred through the second transfer line 140 may be 34 bar. The second liquid stored in the second storage part 120 may be injected into the second inlet 220 by a pumping pressure of 34 bar.

The block unit 200 may be connected to the liquid supply unit 100. The block unit 200 may receive the first liquid and the second liquid from the liquid supply unit 100. The block unit 200 may be connected to the moving unit 700. A cross-sectional shape of the block unit 200 is not limited to the rectangle shown in FIG. 3 and may be designed to have various shapes such as polygonal, circular, and elliptical shapes.

The block unit 200 may be provided with the first inlet 210, the second inlet 220, and an outlet 230.

The first inlet 210 may be connected to the first transfer line 130. The first liquid transferred through the first transfer line 130 may be injected into the first inlet 210. The first inlet 210 may be formed to pass through the block unit 200 in a thickness direction. For example, the first inlet 210 may be formed to pass through the block unit 200 in the direction parallel to the third direction.

The second inlet 220 may be connected to the second transfer line 140. The second liquid transferred through the second transfer line 140 may be injected into the second inlet 220. The second inlet 220 may be formed to pass through the block unit 200 in the thickness direction. For example, the second inlet 220 may be formed to pass through the block unit 200 in the direction parallel to the third direction.

The first inlet 210 and the second inlet 220 may be disposed in the block unit 200 to be spaced apart from each other in a direction parallel to the first direction.

The outlet 230 may be in communication with the first inlet 210 and the second inlet 220. The outlet 230 may be provided integrally with the block unit 200. The outlet 230 may protrude from the block unit 200.

The outlet 230 may be formed in a hollow shape having an empty inside. The inside of the outlet 230 may be in communication with the inside of the first inlet 210 and the inside of the second inlet 220.

The first liquid injected through the first inlet 210 and the second liquid injected through the second inlet 220 may come into contact with each other inside the outlet 230.

A cross-sectional shape of the outlet 230 is not limited to the circular shape shown in FIG. 7 and may be designed to have various shapes such as an elliptical shape, a polygonal shape, and the like.

The first liquid injected through the first inlet 210 and the second liquid injected through the second inlet 220 may pass through the inside of the block unit 200 and may be discharged through the outlet 230.

The outlet 230 may include a first outlet 231 and a second outlet 232.

The first outlet 231 may extend from the block unit 200. The first outlet 231 may extend from a lower surface (based on FIG. 5) of the block unit 200 in a direction opposite to the third direction. The first outlet 231 may be provided with a screw thread. The screw thread may be formed on an outer circumferential surface of the first outlet 231. The cover unit 400 may be coupled to the first outlet 231.

The second outlet 232 may extend from the first outlet 231. The second outlet 232 may extend from the first outlet 231 in the direction opposite to the third direction.

The second outlet 232 may be formed to have an outer diameter smaller than that of the first outlet 231. The second outlet 232 may extend from the first outlet 231 with a stepped difference. The nozzle unit 300 may be coupled to the second outlet 232.

The nozzle unit 300 may be connected to the outlet 230. The nozzle unit 300 may be in communication with the outlet 230. The nozzle unit 300 may be formed in a hollow shape having a set length. The inside of the nozzle unit 300 may be in communication with the inside of the outlet 230. The nozzle unit 300 may be disposed in the direction parallel to the third direction.

The nozzle unit 300 may include a transparent material. The nozzle unit 300 may be manufactured by including a transparent plastic material. Accordingly, the inside of the nozzle unit 300 may be recognized from the outside of the nozzle unit 300.

The nozzle unit 300 may include a nozzle body part 310, a hopper part 320, and a discharge part 330.

The nozzle body part 310 may provide a space in which the first liquid and the second liquid are mixed. The nozzle body part 310 may accommodate a mixing promotion part 500. The mixing promotion part 500 may be disposed inside the nozzle body part 310.

The hopper part 320 may be provided on one side (upper side in FIG. 5) in a longitudinal direction of the nozzle body part 310 parallel to the third direction. The hopper part 320 may extend from the nozzle body part 310 in the third direction.

The hopper part 320 may be connected to the second outlet 232. The hopper part 320 may be formed to surround the second outlet 232. The inner circumferential surface of the hopper part 320 may be in close contact with the outer circumferential surface of the second outlet 232.

A diameter of the nozzle body part 310 may be formed to be smaller than a diameter of the hopper part 320. An outer diameter of the hopper part 320 may be formed to be larger than an outer diameter of the nozzle body part 310. The hopper part 320 may extend from the nozzle body part 310 with a stepped difference. The hopper part 320 may be formed in a funnel shape.

The discharge part 330 may be provided on the other side (lower side in FIG. 5) in the longitudinal direction of the nozzle body part 310 parallel to the third direction. The discharge part 330 may extend from the nozzle body part 310 in the direction opposite to the third direction.

The discharge part 330 may discharge a mixed liquid mixed and flowing in the nozzle body part 310. The first liquid and the second liquid mixed and flowing in the nozzle body part 310 may be discharged through the discharge part 330 and applied to the vent 11 of the secondary battery 10. Here, the mixed liquid may be exemplified as a potting liquid in which the first liquid and the second liquid are mixed.

A diameter of the discharge part 330 may be formed to be smaller than the diameter of the nozzle body part 310. An outer diameter of the discharge part 330 may be formed to be smaller than the outer diameter of the nozzle body part 310. The discharge part 330 may extend from the nozzle body part 310 with a stepped difference.

The discharge part 330 may protrude from the cover unit 400. The discharge part 330 may extend from a cover body part 410 in the direction opposite to the third direction. Accordingly, the discharge part 330 may be exposed to the outside.

The cover unit 400 may be connected to the outlet 230. The cover unit 400 may cover the nozzle unit 300.

The cover unit 400 may support the nozzle unit 300 and protect the nozzle unit 300 from an external impact and foreign substances. The cover unit 400 may be formed in a hollow shape having a set length. The cover unit 400 may provide a space which accommodates the nozzle unit 300 therein. The cover unit 400 may be disposed in the direction parallel to the third direction.

The cover unit 400 may include the cover body part 410, a holder 420, and a nut 430.

The cover body part 410 may be formed to surround the nozzle body part 310. The cover body part 410 may accommodate the nozzle body part 310. The nozzle body part 310 may be disposed inside the cover body part 410.

An opening 411 may be provided in the cover body part 410. The opening 411 may be provided in an outer circumferential surface of the cover body part 410. The opening 411 may be formed to pass through a portion of the outer surface of the cover body part 410. The opening 411 may be formed to have the shape of a long hole extending in the direction parallel to the third direction.

The nozzle body part 310 may be exposed through the opening 411 formed in the cover body part 410. Accordingly, the nozzle body part 310 may be recognized through the opening 411 of the cover body part 410 from the outside of the cover unit 400. Accordingly, it is possible to check the mixed state of the first liquid and the second liquid accommodated in the nozzle body part 310, the flow state of the mixed liquid, and the like.

The holder 420 may be provided on one side (upper side in FIG. 5) in a longitudinal direction of the cover body part 410 parallel to the third direction. The holder 420 may extend from the cover body part 410 in the third direction.

A diameter of the cover body part 410 may be formed to be smaller than the diameter of the holder 420. An outer diameter of the holder 420 may be formed to be larger than an outer diameter of the cover body part 410. The holder 420 may extend from the cover body part 410 with a stepped difference.

The holder 420 may support the hopper part 320. The hopper part 320 may be accommodated in the holder 420. The holder 420 may be formed to surround the hopper part 320. The hopper part 320 may be accommodated in the holder 420.

The holder 420 may be provided with a first seating part 421. The first seating part 421 may be formed to protrude from an inner circumferential surface of the holder 420. The first seating part 421 may protrude from the inner circumferential surface of the holder 420 and may be formed in a circumferential direction of the holder 420.

The hopper part 320 may be seated on the first seating part 421. The lower surface of the hopper part 320 may be seated on the first seating part 421, and the hopper part 320 may be supported by the holder 420.

The nut 430 may be spirally coupled to the first outlet 231. A screw thread may be formed on an inner circumferential surface of the nut 430. The nut 430 may support the holder 420.

The diameter of the holder 420 may be formed to be smaller than a diameter of the nut 430. The holder 420 may be accommodated in the nut 430. The nut 430 may be disposed to surround the holder 420.

The nut 430 may be provided with a second seating part 431. The second seating part 431 may be formed to protrude from an inner circumferential surface of the nut 430. The second seating part 431 may protrude from the inner circumferential surface of the nut 430 and may be formed in a circumferential direction of the nut 430.

The holder 420 may be seated on the second seating part 431. The lower surface of the holder 420 may be seated on the second seating part 431, and the holder 420 may be supported by the nut 430.

The mixing promotion part 500 may be installed in the nozzle unit 300. The mixing promotion part 500 may promote mixing of the first liquid and the second liquid.

The mixing promotion part 500 may be accommodated inside the nozzle body part 310. The mixing promotion part 500 may include a screw element 510. The mixing promotion part 500 may be fixed to the inside of the nozzle body part 310. The mixing promotion part 500 may be fixed to the nozzle body part 310 by various types of coupling methods such as welding, bolting, fitting, and the like.

The mixing promotion part 500 may be disposed in the longitudinal direction of the nozzle body part 310 parallel to the third direction. The mixing promotion part 500 may be recognized from the outside through the nozzle body part 310. The mixing promotion part 500 may be recognized from the outside through the opening 411 of the cover body part 410.

The first liquid and the second liquid may flow inside the nozzle body part 310 while being stirred and mixed by the mixing promotion part 500. Accordingly, the first liquid and the second liquid may be uniformly mixed while being continuously stirred by the mixing promotion part 500. Arrows shown in FIG. 10 indicate flow directions of the first liquid, the second liquid, and the mixed liquid. Here, the flow direction may be a direction opposite to the third direction.

The sealing member 600 may be installed between the nozzle unit 300 and the block unit 200. The sealing member 600 may be interposed between the hopper part 320 and the second outlet 232. The sealing member 600 may be formed in a ring shape. The sealing member 600 may include an elastically deformable material. For example, the sealing member 600 may be made of rubber, silicone, or plastic.

The sealing member 600 may seal the gap between the hopper part 320 and the second outlet 232 to block external air. Since the outside air is blocked by the sealing member 600, the internal pressure of the nozzle unit 300 may be maintained. Accordingly, it is possible to prevent the mixed liquid (potting liquid) from flowing out of the nozzle unit 300 during the potting process of potting the vent 11. In other words, it is possible to prevent the mixed liquid from flowing out through the discharge part 330 in a state in which operations of the first pump 111 and the second pump 121 are turned off.

The moving unit 700 may be connected to the block unit 200. The moving unit 700 may move the block unit 200. The block unit 200 may be fixed to the moving unit 700 by various types of coupling methods such as welding, bolting, fitting, and the like.

The moving unit 700 may include a first guide part 710 that is positioned above the secondary battery 10 (based on FIG. 1) and to which the block unit 200 is movably coupled.

The first guide part 710 may include a first guide main body 711 disposed in the direction parallel to the first direction, a first guide rail 712 provided on an outer surface of the first guide main body 711 and disposed parallel to the first guide main body 711, and a first guide block 713 movably coupled to the first guide rail 712.

The block unit 200 may be coupled to the first guide block 713. Accordingly, the block unit 200 may be moved in the first direction or the direction opposite to the first direction.

The moving unit 700 according to the present embodiment may further include a second guide part 720 to which the first guide part 710 is movably coupled.

The second guide part 720 may include a second guide main body 721 disposed in the direction parallel to the third direction, a second guide rail 722 provided on an outer surface of the second guide main body 721 and disposed parallel to the second guide main body 721, and a second guide block 723 movably coupled to the second guide rail 722.

The first guide main body 711 may be coupled to the second guide block 723. Accordingly, the first guide main body 711 may be moved in the third direction or the direction opposite to the third direction. Accordingly, the block unit 200 may be moved in the third direction or the direction opposite to the third direction.

The moving unit 700 according to the present embodiment may further include a third guide part 730 to which the second guide part 720 is movably coupled.

The third guide part 730 may include a third guide main body 731 disposed in a direction parallel to the second direction, a third guide rail 732 provided on an outer surface of the third guide main body 731 and disposed parallel to the third guide main body 731, and a third guide block 733 movably coupled to the third guide rail 732.

The second guide main body 721 may be coupled to the third guide block 733. Accordingly, the second guide main body 721 may be moved in the second direction or the direction opposite to the second direction. Accordingly, the block unit 200 may be moved in the second direction or the direction opposite to the second direction.

According to embodiments of the present disclosure, since external air is blocked by a sealing member interposed between a hopper part and a second outlet to seal a gap between the hopper part and the second outlet, the internal pressure of a nozzle unit can be maintained. Therefore, it is possible to prevent the mixed liquid (potting liquid) from flowing out of the nozzle unit during a potting process of potting a vent.

However, technical effects acquirable through the present disclosure are not limited to the herein-described technical effects, and other technical effects which are not mentioned will be clearly understood by those skilled in the art from the description of the disclosure described herein.

Although the present disclosure has been described with reference to the embodiments shown in the drawings, these are merely exemplary, and it should be understood by those skill in the art that various modifications and equivalents are possible.

Accordingly, the technical scope of the present disclosure should be defined by the following claims.

## Claims

1. A secondary battery potting device comprising:
a liquid supply unit (100) supplying a first liquid and a second liquid;
a block unit (200) connected to the liquid supply unit (100) and provided with a first inlet (210) and a second inlet (220) through which the first liquid and the second liquid are injected, respectively, and an outlet (230) which is in communication with the first inlet (210) and the second inlet (220);
a nozzle unit (300) connected to the outlet (230) and communicating with the outlet (230);
a cover unit (400) coupled to the outlet (230) and covering the nozzle unit (300); and
a mixing promotion part (500) installed in the nozzle unit (300) and promoting mixing of the first liquid and the second liquid.

2. The secondary battery potting device of claim 1, wherein the outlet (230) includes:
a first outlet (231) extending from the block unit (200) and having a screw thread formed on an outer circumferential surface thereof; and
a second outlet (232) extending from the first outlet (231) and having an outer diameter smaller than that of the first outlet (231).

3. The secondary battery potting device of claim 2, wherein the nozzle unit (300) includes:
a nozzle body part (310) accommodating the mixing promotion part (500) and providing a space in which the first liquid and the second liquid are mixed;
a hopper part (320) provided at one side of the nozzle body part (310) and formed to surround the second outlet (232); and
a discharge part (330) provided at the other side of the nozzle body part (310) and through which a mixed liquid flowing in the nozzle body part (310) is discharged.

4. The secondary battery potting device of claim 3, wherein the mixing promotion part (500) includes a screw element (510) fixed to the inside of the nozzle body part (310).

5. The secondary battery potting device of claim 3 or 4, wherein a diameter of the nozzle body part (310) is formed to be smaller than a diameter of the hopper part (320), and
a diameter of the discharge part (330) is formed to be smaller than the diameter of the nozzle body part (310).

6. The secondary battery potting device of any one of the claims 3 to 5, the nozzle unit (300) includes a transparent material.

7. The secondary battery potting device of any one of the claims 3 to 6, further comprising a sealing member (600) interposed between the hopper part (320) and the second outlet (232).

8. The secondary battery potting device of any one of the claims 3 to 7, wherein the cover unit (400) includes:
a cover body part (410) surrounding the nozzle body part (310);
a holder (420) provided at one side of the cover body part (410) and supporting the hopper part (320); and
a nut (430) supporting the holder (420) and spirally coupled to the first outlet (231).

9. The secondary battery potting device of claim 8, wherein a diameter of the cover body part (410) is formed to be smaller than a diameter of the holder (420), and
the hopper part (320) is accommodated in the holder (420).

10. The secondary battery potting device of claim 8 or 9, wherein a diameter of the holder (420) is formed to be smaller than a diameter of the nut (430), and
the holder (420) is accommodated in the nut (430).

11. The secondary battery potting device of any one of the claims 8 to 10, wherein the discharge part (330) protrudes from the cover body part (410) and is exposed.

12. The secondary battery potting device of any one of the claims 8 to 11, wherein an opening (411) is provided in an outer circumferential surface of the cover body part (410).

13. The secondary battery potting device of any one of the preceding claims, wherein the liquid supply unit (100) includes:
a first storage part (110) in which the first liquid is stored and which includes a first pump (111) pumping the first liquid;
a second storage part (120) in which the second liquid is stored and which includes a second pump (121) pumping the second liquid;
a first transfer line (130) connecting the first storage part (110) and the first inlet (210); and
a second transfer line (140) connecting the second storage part (120) and the second inlet (220).

14. The secondary battery potting device of any one of the preceding claims, further comprising a moving unit (700) to which the block unit (200) is coupled and which moves the block unit (200).

15. The secondary battery potting device of any one of the preceding claims, wherein the first liquid includes a resin, and the second liquid includes a hardener.
